# EUROPEAN PATENT APPLICATION

(11) **EP 4 742 399 A1**
(43) Date of publication of application: **13.05.2026**
(21) Application number: 25755070.7
(22) Date of filing: 15.01.2025
(51) Int. Cl.: H01M 50/317, H01M 50/24, H01M 50/251, H01M 10/48

(54) **BATTERY CONTAINER**

(30) Priority: 15.02.2024 KR 20240022102
(71) Applicant: LG Energy Solution, Ltd., Seoul 07335 (KR)
(72) Inventor: KIM, Yo-Hwan, Daejeon 34122 (KR); KIM, Min-Chul, Daejeon 34122 (KR); YANG, Mun-Seok, Daejeon 34122 (KR); LEE, Hyun-Min, Daejeon 34122 (KR); KIM, Ji-Hun, Daejeon 34122 (KR); YOO, Ji-Ho, Daejeon 34122 (KR); CHO, Tae-Shin, Daejeon 34122 (KR)
(74) Representative: BCKIP Part mbB
(86) International application number: PCT/KR2025/000910
(87) International publication number: WO 2025/173948

(57) **Abstract**

Disclosed is a battery container. A battery container according to an embodiment of the present disclosure may include a case including a front panel having an opening and providing a space therein; a plurality of battery cells positioned inside the case; and a cover that opens and closes the opening.

## Description

### TECHNICAL FIELD

The present disclosure relates to a battery container.

This application is based on and claims priority from Korean Patent Application No. 10-2024-0022102, filed on February 15, 2024, with the Korean Intellectual Property Office, the disclosure of which is incorporated herein in its entirety by reference.

### BACKGROUND ART

Currently commercialized secondary batteries include nickel cadmium batteries, nickel hydrogen batteries, nickel zinc batteries, lithium secondary batteries, and the like, and among these, lithium secondary batteries are in the spotlight because they have advantages of free charging and discharging due to almost no memory effect compared to nickel-based secondary batteries, very low self-discharge rate, and high energy density.

Recently, as issues such as power shortage or eco-friendly energy have come to the fore, energy storage systems (ESSs) for storing generated power are attracting more attention. For example, a smart grid system has been proposed as one of the ways for adjusting the supply and demand of power. The amount of power consumed by consumers is not always constant and may fluctuate frequently. As a representative example, power consumption increases sharply due to the use of cooling systems in the afternoon during summer, and then decreases sharply at night. As such, in terms of power consumption, power consumption is not constant and may fluctuate frequently, but in terms of power supply, it is practically difficult to match such power consumption even if the amount of power produced is adjusted to some extent. Therefore, such an imbalance between the supply and demand of power may cause power oversupply or power shortage, and a smart grid system may flexibly store and adjust power to solve this problem. The smart grid system can be said to be a concept that stores power at times or regions where surplus power occurs, and supplies the stored power to times or regions where power shortage occurs. One of the key components for building this smart grid system can be said to be energy storage systems for storing power. Additionally, as electric vehicles have been commercialized in earnest recently, energy storage systems may also be utilized in facilities for charging electric vehicles, such as charging stations.

Such energy storage systems may include a plurality of battery containers. And, when a thermal event occurs, it is required to reduce the explosion pressure to prevent the battery container from exploding. To meet such requirements, there is an increasing need to discharge flammable or explosive gases inside the battery container to the outside.

### DISCLOSURE

### Technical Problem

The present disclosure is designed to solve the above-described problems and other problems.

Another object of the present disclosure may be to provide a battery container capable of discharging gases inside the case to the outside when a thermal event occurs.

Another object of the present disclosure may be to provide a battery container capable of maintaining a sealed state of the case while no thermal event occurs.

Another object of the present disclosure may be to provide a battery container with improved thermal safety.

### Technical Solution

A battery container according to an embodiment of the present disclosure for achieving the above-described object may include a case including a front panel having an opening and providing a space therein; a plurality of battery cells positioned inside the case; and a cover that opens and closes the opening.

Additionally, the cover may open the opening when a thermal event occurs.

Additionally, the opening and the cover may be provided in plurality.

Additionally, the front panel may function as a door of the case.

Additionally, the plurality of battery cells may be stacked in the vertical direction, and the cover may be positioned on an upper portion of the front panel.

Additionally, a lower portion of the cover may be pivotally connected to the front panel.

Additionally, the battery container may further include an actuator connected to an inner surface of the cover and providing a force for pivoting the cover.

Additionally, the battery container may further include a sealing member disposed between the cover and the front panel.

Additionally, the battery container may further include a locking portion provided on the front panel and detachably coupled to the cover; and a processor controlling the operation of the locking portion.

Additionally, the processor may uncouple the locking portion from the cover when a thermal event occurs.

Additionally, the cover and the locking portion may be provided in plurality, and the processor may uncouple the plurality of covers from the plurality of locking portions altogether when a thermal event occurs.

Additionally, the battery container may further include a temperature sensor provided inside the case, wherein the processor may uncouple the locking portion from the cover when the value sensed by the temperature sensor exceeds a preset value.

Additionally, the battery container may further include a smoke sensor provided inside the case, wherein the processor may uncouple the locking portion from the cover when smoke is sensed inside the case.

Additionally, the battery container may further include a gas sensor provided inside the case, wherein the processor may uncouple the locking portion from the cover when the concentration of hydrogen gas inside the case exceeds a preset value.

Additionally, the processor may uncouple the locking portion from the cover when the supply of a fire extinguishing member into the case is sensed.

An energy storage system according to one aspect of the present disclosure includes a battery container of the present disclosure.

### Advantageous Effects

According to at least one of the embodiments of the present disclosure, gases inside the case may be discharged to the outside when a thermal event occurs.

According to at least one of the embodiments of the present disclosure, a sealed state of the case may be maintained while no thermal event occurs.

According to at least one of the embodiments of the present disclosure, a battery container with improved thermal safety may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery container according to an embodiment of the present disclosure.
FIG. 2 is a perspective view showing that openings of the battery container of FIG. 1 are open.
FIG. 3 is a perspective view showing that doors of the battery container of FIG. 1 are open.
FIG. 4 is a view showing a front panel of the battery container of FIG. 1.
FIG. 5 is a view of the front panel of FIG. 4 viewed from a different direction.
FIG. 6 is an exploded view showing the configuration of the front panel of FIG. 5.
FIG. 7 is a view schematically showing a cross-sectional configuration taken along the cutting line A-A' of FIG. 4.
FIG. 8 is a view showing that the opening of the front panel of FIG. 4 is open.
FIG. 9 is a view of the front panel of FIG. 8 viewed from a different direction.
FIG. 10 is a view schematically showing a cross-sectional configuration taken along the cutting line B-B' of FIG. 8.
FIG. 11 is a view showing a front panel according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

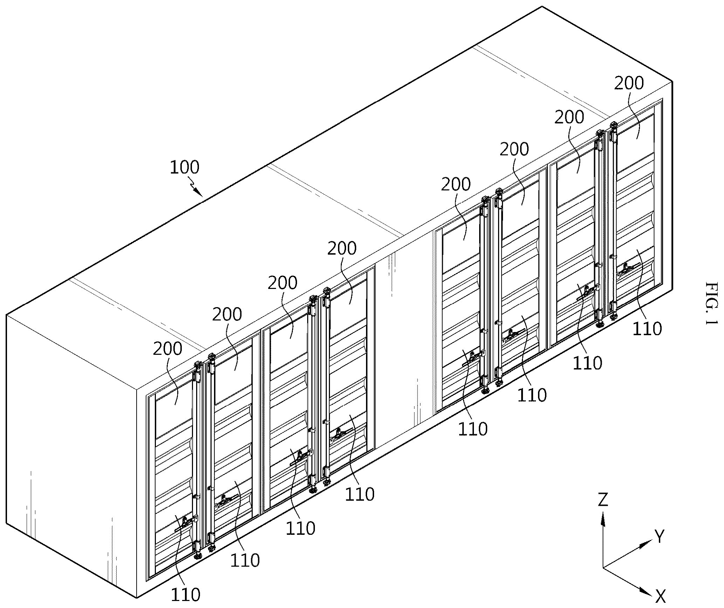

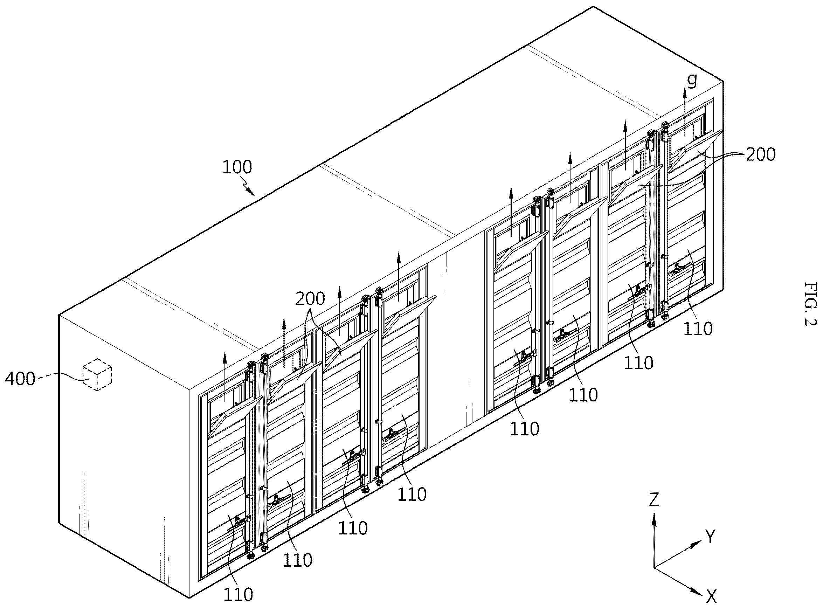

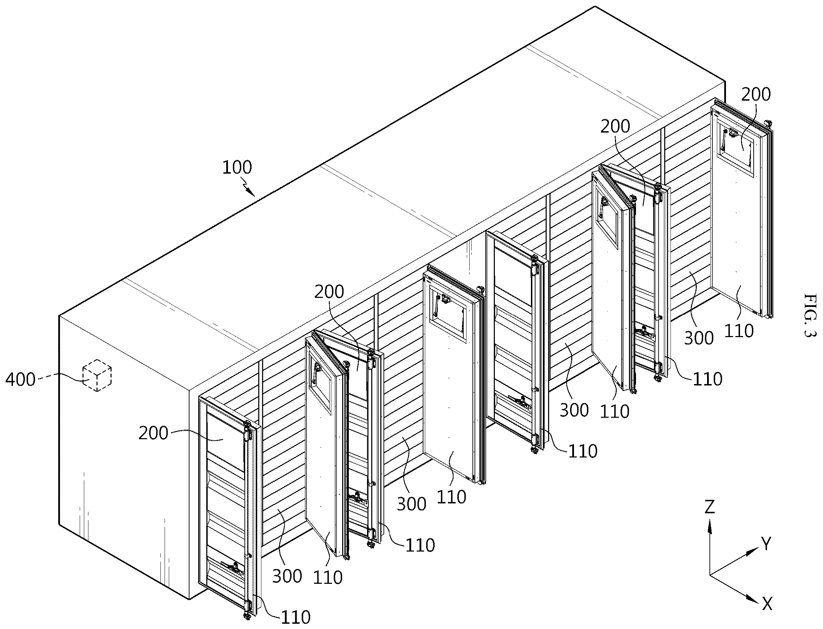

FIG. 1 is a perspective view showing a battery container according to an embodiment of the present disclosure. FIG. 2 is a perspective view showing that openings 101 of the battery container of FIG. 1 are open. FIG. 3 is a perspective view showing that doors 110 of the battery container of FIG. 1 are open.

Referring to FIGS. 1 to 3, a battery container according to an embodiment of the present disclosure may include a case 100, a plurality of battery cells, and a cover 200. The case 100 may form the exterior of the battery container. Additionally, the case 100 may provide a space therein. The case 100 may have a cuboidal shape. For example, the case 100 may include a front panel 110, a rear panel, a top panel, a bottom panel, and a pair of side panels. Each panel may have a rectangular shape. And, the front panel 110 may have an opening 101. The opening 101 may allow the inside and the outside of the case 100 to communicate with each other. Additionally, the opening 101 may expose the inside of the case 100 to the outside.

The plurality of battery cells may be positioned inside the case 100. At this time, the battery cell may refer to a secondary battery. A plurality of battery cells may form a battery assembly, a battery module, or a battery pack 300. And, the battery assembly, the battery module, or the battery pack 300 may be provided in plurality. Additionally, the plurality of battery cells, the plurality of battery assemblies, the plurality of battery modules, or the plurality of battery packs 300 may be stacked or disposed along the vertical direction or the Z-axis direction. Additionally, the plurality of battery cells, the plurality of battery assemblies, the plurality of battery modules, or the plurality of battery packs 300 may be stacked or disposed along the left-right direction or the Y-axis direction. Additionally, the plurality of battery cells, the plurality of battery assemblies, the plurality of battery modules, or the plurality of battery packs 300 may be stacked or disposed along the front-back direction or the X-axis direction. The plurality of battery cells, the plurality of battery assemblies, the plurality of battery modules, or the plurality of battery packs 300 may form a battery rack. The battery rack may be provided in plurality.

The cover 200 may open and close the opening 101. The cover 200 may be connected, installed, coupled, and fixed to the front panel 110.

According to this configuration of the present disclosure, the cover 200 may allow the inside and the outside of the case 100 to communicate with each other. As a result, the battery container may quickly exchange materials or heat with the outside. Additionally, the thermal safety of the battery container may be improved.

Referring to FIGS. 1 to 3, the cover 200 of the battery container according to an embodiment of the present disclosure may open the opening 101 when a thermal event occurs. The battery container may be operated in a sealed state against the outside. However, when a thermal event occurs, flammable or explosive gases (g) may be generated from the battery cell. As a result, an explosion may occur inside the case 100, and the explosion pressure may seriously damage the battery container and may cause damage to the outside.

However, according to this configuration of the present disclosure, the thermal safety of the battery container may be improved. When a thermal event occurs, the cover 200 opens the opening 101, so that flammable or explosive gases (g) may be discharged to the outside of the case 100. As a result, the risk of explosion of the battery container may be lowered.

Referring to FIGS. 1 to 3, the front panel 110 of the battery container according to an embodiment of the present disclosure may function as a door 110 of the case 100. The front panel 110 may be referred to as a door 110. The doors 110 may be configured in a pair. The doors 110 may open or expose the inside of the case 100.

According to this configuration of the present disclosure, the thermal safety of the battery container may be improved. The door 110 may be opened to improve the thermal safety of the battery container, but the flammable or explosive gases (g) may be discharged to the outside of the case 100 more quickly and easily by opening the opening 101 of the door 110.

Additionally, according to this configuration of the present disclosure, the maintenance and repair of the cover 200 may be facilitated. By opening the door 110, the workability of the inner configuration of the door 110 and the cover 200 may be improved.

Referring to FIGS. 1 to 3, the opening 101 and the cover 200 of the battery container according to an embodiment of the present disclosure may be provided in plurality. The plurality of openings 101 and the plurality of covers 200 may be configured to be in a one-to-one correspondence.

For example, the front panel 110 may be configured in eight panels. And, the opening 101 may be formed in each of the front panels 110, and eight covers 200 may be coupled to each of the openings 101.

According to this configuration of the present disclosure, the thermal safety of the battery container may be improved. The plurality of front panels 110 may be arranged along the case length direction or the Y-axis direction. And, the opening 101 is provided in each of the front panels 110, so that the gas discharge of the battery container may be achieved quickly as a whole.

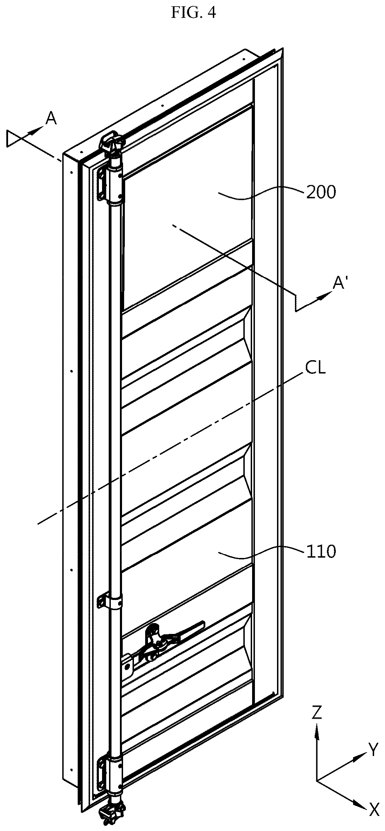

FIG. 4 is a view showing a front panel 110 of the battery container of FIG. 1. Referring to FIG. 4, the front panel 110 may have a rectangular shape. And, the cover 200 may be positioned on an upper portion of the front panel 110. For example, the opening 101 or the cover 200 may be positioned higher than the center line CL of the height of the front panel 110 in the Z-axis direction.

According to this configuration of the present disclosure, gas discharge from the battery container may be facilitated. Flammable or explosive gases (g) generated by a thermal event are high-temperature gases and may have a property of moving upward. By opening the opening 101 with the cover 200 positioned on the upper portion of the front panel 110, gas discharge may be facilitated.

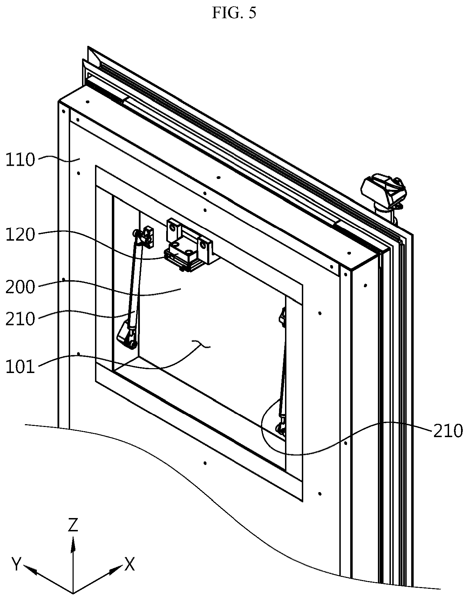

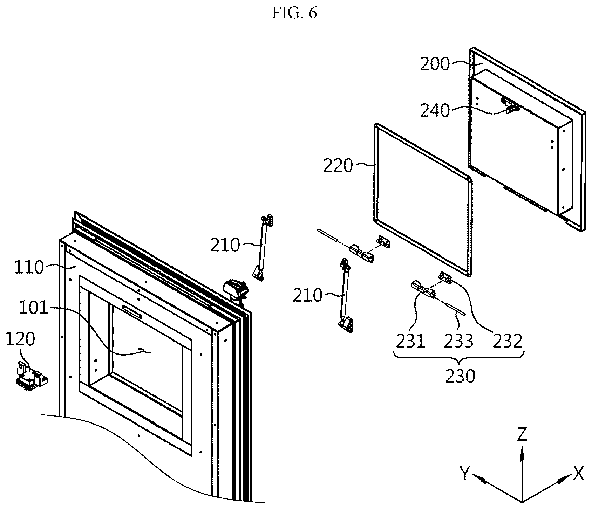

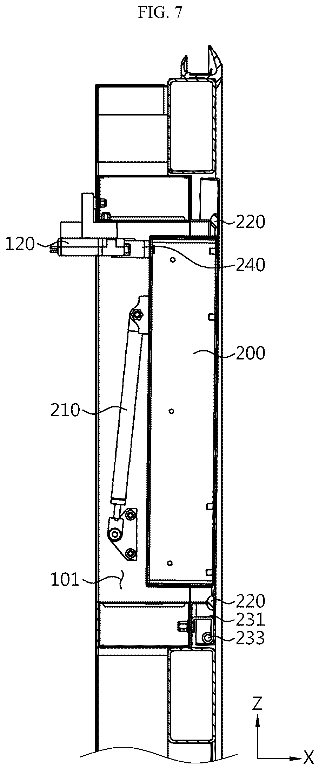

FIG. 5 is a view of the front panel 110 of FIG. 4 viewed from a different direction. FIG. 6 is an exploded view showing the configuration of the front panel 110 of FIG. 5. FIG. 7 is a view schematically showing a cross-sectional configuration taken along the cutting line A-A' of FIG. 4.

Referring to FIGS. 5 to 7, a lower portion of the cover 200 of the battery container according to an embodiment of the present disclosure may be pivotally connected to the front panel 110. The opening 101 may have a rectangular shape. Additionally, the cover 200 may have a rectangular shape corresponding to the shape of the opening 101. At this time, a lower edge of the cover 200 may be pivotally connected to the front cover 200. For example, the cover 200 may be connected to the front panel 110 by a hinge 230. The hinge 230 may include a first part 231, a second part 232, and a rotation shaft 233. The first part 231 may be fixed to the front panel 110. And, the second part 232 may be fixed to the cover 200. And, the first part 231 and the second part 232 may be coupled to the rotation shaft 233.

The cover 200 may open the opening 101 by pivoting the lower edge portion with respective to the front panel 110 and moving the upper edge portion away from the front panel 110.

According to this configuration of the present disclosure, the thermal safety of the battery container may be improved. The gas discharged through the opening 101 may be guided to move upward along the cover 200. As a result, the high-temperature gas may not be discharged to structures or persons around the case 100 of the battery container.

Referring to FIGS. 5 to 7, the battery container according to an embodiment of the present disclosure may include an actuator 210. One side of the actuator 210 may be connected to an inner surface of the cover 200. And, the other side of the actuator 210 may be connected to the front panel 110. Additionally, the actuator 210 may provide a force to pivot the cover 200. At this time, the actuator 210 may be a hydraulic actuator 210 or a pneumatic actuator 210. And, the actuators 210 may be provided in a pair. Additionally, the actuator 210 may be replaced by an elastic member. At this time, the elastic member may provide a restoring force to pivot the cover 200.

According to this configuration of the present disclosure, the actuator 210 may assist the pivoting of the cover 200.

Referring to FIGS. 5 to 7, the battery container according to an embodiment of the present disclosure may include a sealing member 220. The sealing member 220 may extend along the perimeter of the cover 200 or the opening 101. The sealing member 220 may be a rectangular ring. The sealing member 220 may include an elastic material. The sealing member 220 may be positioned between the front panel 110 and the cover 200 and may be compressed. Additionally, the sealing member 220 may be positioned above the hinge 230.

According to this configuration of the present disclosure, the sealing member 220 may seal the battery container. By being sealed, the battery container may operate stably while no thermal event occurs.

Referring to FIGS. 5 to 7, the battery container according to an embodiment of the present disclosure may include a locking portion 120. The locking portion 120 may be provided on the front panel 110. And, the locking portion 120 may be detachably coupled to the cover 200. The latch portion 240 may be provided on an inner surface of the cover 200. The latch portion 240 may be provided on an upper portion of the inner surface of the cover 200. And, the locking portion 120 may be provided on an upper end of the opening 101. The latch portion 240 and the locking portion 120 may be engaged. By engaging the latch portion 240 with the locking portion 120, the cover 200 may close the opening 101 and seal the opening 101.

And, the battery container may include a processor. The processor may control the operation of the locking portion 120. The processor may disengage the locking portion 120 from the latch portion 240. When the locking portion 120 and the latch portion 240 are disengaged or uncoupled, the cover 200 may be pivoted by the actuator 210 and the opening 101 may be opened.

According to this configuration of the present disclosure, the thermal safety of the battery container may be improved. Additionally, the locking portion 120 may stably fix the cover 200, thereby maintaining a sealed state of the battery container.

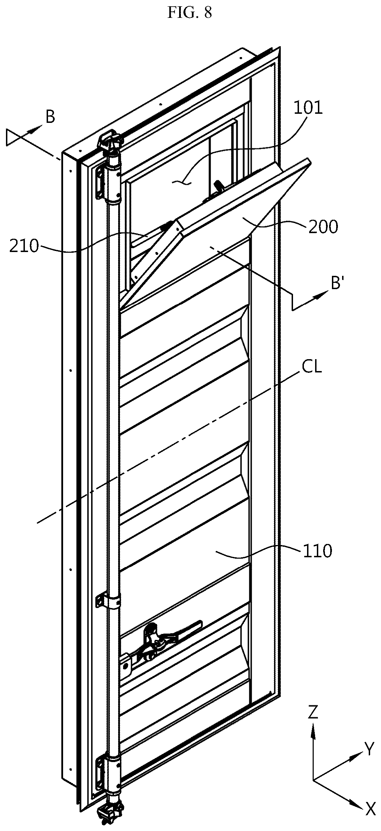

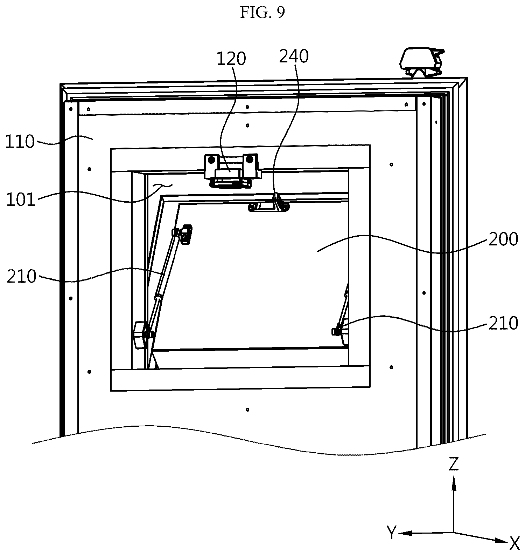

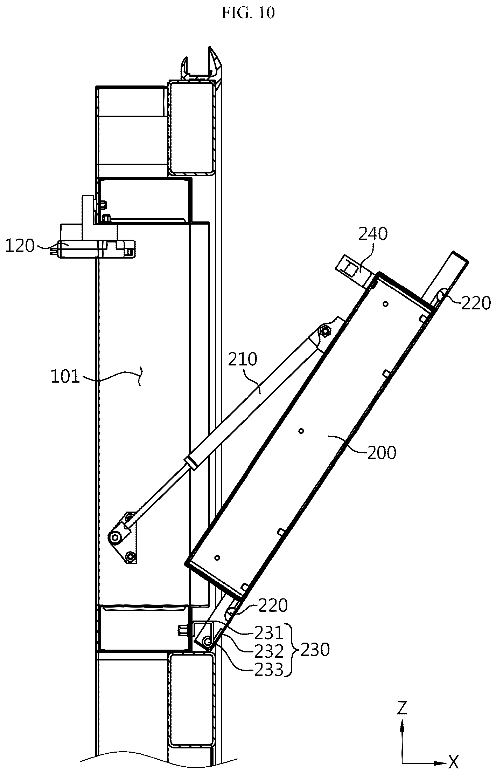

FIG. 8 is a view showing that the opening 101 of the front panel 110 of FIG. 4 is open. FIG. 9 is a view of the front panel 110 of FIG. 8 viewed from a different direction. FIG. 10 is a view schematically showing a cross-sectional configuration taken along the cutting line B-B' of FIG. 8.

Referring to FIGS. 8 to 10, the processor of the battery container according to an embodiment of the present disclosure may uncouple the locking portion 120 from the cover 200 when a thermal event occurs. The processor may uncouple the locking portion 120 from the latch portion 240 when a thermal event occurs. When the locking portion 120 and the latch portion 240 are uncoupled, the actuator 210 may extend to pivot the cover 200. Additionally, the actuator 210 may limit the amount of pivoting of the cover 200. For example, the cover 200 may be pivoted until the actuator 210 reaches its maximum stretch length.

According to this configuration of the present disclosure, the thermal safety of the battery container may be improved. When a thermal event occurs, the locking portion 120 and the latch portion 240 are disengaged, thereby opening the opening 101 and allowing flammable or explosive gases (g) to be discharged to the outside of the case 100. As a result, the risk of explosion of the battery container may be lowered.

Referring to FIGS. 8 to 10, the processor of the battery container according to an embodiment of the present disclosure may open all the plurality of covers 200 when a thermal event occurs. Alternatively, the processor may uncouple the plurality of covers 200 from the plurality of locking portions 120 altogether.

According to this configuration of the present disclosure, the thermal safety of the battery container may be improved. By opening all the plurality of covers 200, gas discharge from the battery container may be achieved quickly as a whole.

Referring to FIG. 2 and FIGS. 8 to 10, the battery container according to an embodiment of the present disclosure may include a sensor 400. The sensor 400 may be positioned inside the case 100. The sensor 400 may be a temperature sensor 400. The temperature sensor 400 may sense the temperature inside the case 100, the temperature of at least one of the battery cell, the battery assembly, the battery module, the battery pack 300, or the battery rack. The processor may disengage the locking portion 120 from the latch portion 240 when the value sensed by the temperature sensor 400 exceeds a preset value. For example, the processor may open the cover 200 when the temperature of the battery pack 300 exceeds 57 degrees.

According to this configuration of the present disclosure, the thermal safety of the battery container may be improved. The processor may sense the occurrence of a thermal event through the temperature sensor 400 and discharge the gas inside the case 100.

Referring to FIG. 2 and FIGS. 8 to 10, the battery container according to an embodiment of the present disclosure may include a sensor 400. The sensor 400 may be positioned inside the case 100. The sensor 400 may be a smoke sensor 400. The smoke sensor 400 may sense that smoke is generated inside the case 100. Upon sensing that smoke is generated, the processor may disengage the locking portion 120 from the latch portion 240.

According to this configuration of the present disclosure, the thermal safety of the battery container may be improved. The processor may sense the occurrence of a thermal event through the smoke sensor 400 and discharge the gas inside the case 100.

Referring to FIG. 2 and FIGS. 8 to 10, the battery container according to an embodiment of the present disclosure may include a sensor 400. The sensor 400 may be positioned inside the case 100. The sensor 400 may be a gas sensor 400. The gas sensor 400 may sense the concentration of a specific gas inside the case 100. For example, when a thermal event occurs, hydrogen gas may be generated from a battery cell. And, the gas sensor 400 may sense the concentration of the hydrogen gas. When the concentration of the hydrogen gas exceeds a preset value, the processor may disengage the locking portion 120 from the latch portion 240. For example, when the concentration of the hydrogen gas exceeds 0.4%, the processor may open the cover 200.

According to this configuration of the present disclosure, the thermal safety of the battery container may be improved. The processor may sense the occurrence of a thermal event through the gas sensor 400 and discharge the gas inside the case 100.

Referring to FIG. 2 and FIGS. 8 to 10, the processor of the battery container according to an embodiment of the present disclosure may uncouple the locking portion 120 from the cover 200 when the supply of a fire extinguishing member into the case 100 is sensed. When a thermal event occurs, the processor may supply the fire extinguishing member into the case 100. For example, the fire extinguishing member may be a fire extinguishing powder, a fire extinguishing liquid, or water.

According to this configuration of the present disclosure, the thermal safety of the battery container may be improved.

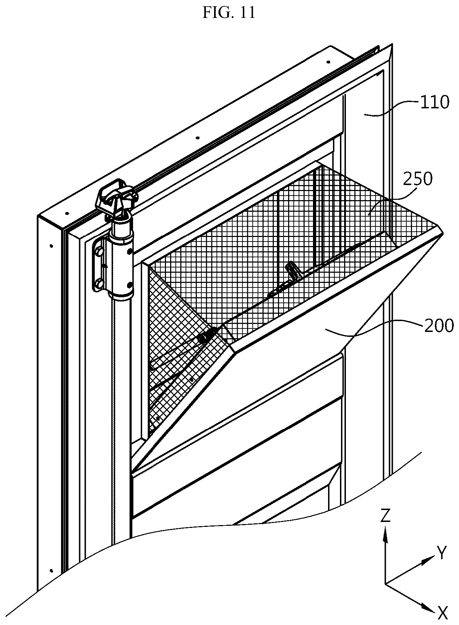

FIG. 11 is a view showing a front panel 110 according to another embodiment of the present disclosure. Referring to FIG. 11, the battery container according to another embodiment of the present disclosure may further include a capturing portion 250. The capturing portion 250 may connect the perimeter of the cover 200 and the opening 101. The capturing portion 250 may be made of a porous material. For example, the capturing portion 250 may include a fiber material. Additionally, the capturing portion 250 may include a flexible material. The capturing portion 250 may allow gas inside the case 100 to pass through and capture ignitable particles. As a result, ignitable particles may be prevented from being discharged to the outside of the case 100.

According to this configuration of the present disclosure, the thermal safety of the battery container may be improved. By suppressing the discharge of ignitable particles, it is possible to suppress the propagation of fire or explosion to the outside of the battery container.

An energy storage system (ESS) according to the present disclosure may include a battery container according to the present disclosure.

Meanwhile, the terms indicating directions as used herein such as upper, lower, left, right, front, and back are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A battery container comprising:
a case comprising a front panel having an opening and providing a space therein;
a plurality of battery cells positioned inside the case; and
a cover that opens and closes the opening.

2. The battery container according to claim 1,
wherein the cover opens the opening when a thermal event occurs.

3. The battery container according to claim 1,
wherein the opening and the cover are provided in plurality.

4. The battery container according to claim 1,
wherein the front panel functions as a door of the case.

5. The battery container according to claim 1,
wherein the plurality of battery cells are stacked in the vertical direction, and
the cover is positioned on an upper portion of the front panel.

6. The battery container according to claim 1,
wherein a lower portion of the cover is pivotally connected to the front panel.

7. The battery container according to claim 6, further comprising:
an actuator connected to an inner surface of the cover and providing a force for pivoting the cover.

8. The battery container according to claim 1, further comprising:
a sealing member disposed between the cover and the front panel.

9. The battery container according to claim 1, further comprising:
a locking portion provided on the front panel and detachably coupled to the cover; and
a processor controlling the operation of the locking portion.

10. The battery container according to claim 1,
wherein the processor uncouples the locking portion from the cover when a thermal event occurs.

11. The battery container according to claim 9,
wherein the cover and the locking portion are provided in plurality, and
the processor uncouples the plurality of covers from the plurality of locking portions altogether when a thermal event occurs.

12. The battery container according to claim 9, further comprising:
a temperature sensor provided inside the case,
wherein the processor uncouples the locking portion from the cover when the value sensed by the temperature sensor exceeds a preset value.

13. The battery container according to claim 9, further comprising:
a smoke sensor provided inside the case,
wherein the processor uncouples the locking portion from the cover when smoke is sensed inside the case.

14. The battery container according to claim 9, further comprising:
a gas sensor provided inside the case,
wherein the processor uncouples the locking portion from the cover when the concentration of hydrogen gas inside the case exceeds a preset value.

15. The battery container according to claim 9,
wherein the processor uncouples the locking portion from the cover when the supply of a fire extinguishing member into the case is sensed.

16. An energy storage system comprising a battery container according to any one of claims 1 to 15.
